# EUROPEAN PATENT SPECIFICATION

(11) **EP 2 232 355 B1**
(45) Date of publication and mention of the grant of the patent: **29.08.2012**
(21) Application number: 08846774.1
(22) Date of filing: 06.11.2008
(51) Int. Cl.: G06F 3/044, G06F 3/048, G06F 3/041

(54) **MULTI-POINT DETECTION ON A SINGLE-POINT DETECTION DIGITIZER**
MEHRPUNKTDETEKTION AUF EINER EINZELPUNKT-DETEKTIONSDIGITALISIERUNGSVORRICHTUNG
DÉTECTION MULTIPOINT MISE EN OEUVRE SUR UN NUMÉRISEUR À DÉTECTION DE POINT UNIQUE

(30) Priority: 07.11.2007 US 996222 P; 22.01.2008 US 6567 P
(43) Date of publication of application: 29.09.2010
(73) Proprietor: N-Trig Ltd., 44643 Kfar-Saba (IL)
(72) Inventor: RIMON, Ori, 62961 Tel-Aviv (IL); BEN-DAVID, Amihai, 30889 Caesarea (IL); MOORE, Jonathan, 69494 Tel-Aviv (IL)
(74) Representative: Fichter, Robert Arno
(86) International application number: PCT/IL2008/001469
(87) International publication number: WO 2009/060454

(56) References cited:
- WO-A2-2007/089766
- US-A1- 2006 025 218
- US-B1- 6 958 749

## Description

### FIELD OF THE INVENTION

The present invention, in some embodiments thereof, relates to digitizer sensors and more particularly, but not exclusively to multi-point interactions with digitizer sensors, especially with single-point detection digitizers.

### BACKGROUND OF THE INVENTION

Digitizing systems that allow a user to operate a computing device with a stylus and/or finger are known. Typically, a digitizer is integrated with a display screen, e.g. over-laid on the display screen, to correlate user input, e.g. stylus interaction and/or finger touch on the screen with the virtual information portrayed on display screen. Position detection of the stylus and/or fingers detected provides input to the computing device and is interpreted as user commands. In addition, one or more gestures performed with finger touch and/or stylus interaction may be associated with specific user commands. Typically, input to the digitizer sensor is based on Electro-Magneticu (EM) transmission provided by the stylus touching the sensing surface and/or capacitive coupling provided by the finger touching the screen.

U.S. Patent No. 6,690,156 entitled "Physical Object Location Apparatus and Method and a Platform using the same" and U.S. Patent No. 7,292,229 entitled "Transparent Digitizer" both of which are assigned to N-trig Ltd.,) describe a positioning device capable of locating multiple physical objects positioned on a Flat Panel Display (FPD) and a transparent digitizer sensor that can be incorporated into an electronic device, typically over an active display screen of the electronic device . The digitizer sensor includes a matrix of vertical and horizontal conductive lines to sense an electric signal. Typically, the matrix is formed from conductive lines etched on two transparent foils that are superimposed on each other. Positioning the physical object at a specific location on the digitizer provokes a signal whose position of origin may be detected.

U.S. Patent No. 7,372,455, entitled "Touch Detection for a Digitizer" assigned to N-Trig Ltd. describes a detector for detecting both a stylus and touches by fingers or like body parts on a digitizer sensor. The detector typically includes a digitizer sensor with a grid of sensing conductive lines patterned on two polyethylene terephthalate (PET) foils, a source of oscillating electrical energy at a predetermined frequency, and detection circuitry for detecting a capacitive influence on the sensing conductive line when the oscillating electrical energy is applied, the capacitive influence being interpreted as a touch. The detector is capable of simultaneously detecting multiple finger touches. U.S. Patent Application Publication No. US20060026521 and U.S. Patent Application Publication No. US20060026536, entitled "Gestures for touch sensitive input devices" describe reading data from a multi-point sensing device such as a multi-point touch screen where the data pertains to touch input with respect to the multi-point sensing device, and identifying at least one multi-point gesture based on the data from the multi-point sensing device. Data from the multi-point sensing device is in the form of a two dimensional image. Features of the two dimensional image is used to identify the gesture.

US 6958749 B1 discloses a method of altering a spatial feature of a GUI object in response to recognition of a gesture performed on a digitizer.

### SUMMARY OF THE INVENTION

The invention provides a method for recognizing functionality of multi-point interaction with a digitizer as set out in claim 1. Embodiments of the invention are set out in dependent claims 2 to 15.

As used herein multi-point and/or multi-touch input refers to input obtained with at least two user interactions simultaneously interacting with a digitizer sensor, e.g. at two different locations on the digitizer. Multi-point and/or multi-touch input may include interaction with the digitizer sensor by touch and/or hovering. Multipoint and/or multi-touch input may include interaction with a plurality of different and/or same user interactions. Different user interactions may include a fingertip, a stylus, and a token.

As used herein single-point detection sensing device, e.g. single-point detection digitizer systems and/or touch screens, are systems that are configured for unambiguously locating different user interactions simultaneously interacting with the digitizer sensor but are not configured for unambiguously locating like user interactions simultaneously interacting with the digitizer sensor.

As used herein, like and/or same user interactions are user interactions that invoke like signals on the digitizer sensor, e.g. two or more fingers altering a signal in a like manner or two or more stylus' that transmit at a same or similar frequency. As used herein, different user interactions are user interactions that invoke signals that can be differentiated from each other.

As used herein, the term "multi-point sensing device" means a device having a surface on which a plurality of like interactions, e.g. a plurality of fingertips can be detected and localized simultaneously. In a single-point sensing device, from which more then one interaction may be sensed, the multiple simultaneous interactions may not be unambiguously localized.

Optionally, the digitizer system is a single point detection digitizer system.

Optionally, the at least one feature is selected from a group including: shape of the region, aspect ratio of the region, size of the region, location of the region, and orientation of the region.

Optionally, the region is a rectangular region with dimensions defined by the extent of the possible interaction locations.

Optionally, the at least one feature is selected from a group including a length of a diagonal of the rectangle and an angle of the diagonal.

Optionally, the multi-point functionality provides recognition of at least one of multi-point gesture commands and modifier commands.

Optionally, a first interaction location of the multi-point interaction is configured for selection of a virtual button displayed on a display associated with the digitizer system, wherein the virtual button is configured for modifying a functionality of the at least one other interaction of the multi-point interaction.

Optionally, the at least one other interaction is a gesture.

Optionally, the first interaction and the at least one other interaction are performed over non-interfering portions of the digitizer sensor.

Optionally, the spatial feature is a feature of a region incorporating possible interaction locations derivable from the outputs.

Optionally, the at least one feature is selected from a group including: shape of the region, aspect ratio of the region, size of the region, location of the region, and orientation of the region.

Optionally, the region is a rectangular region with dimensions defined by the extent of the possible interaction locations.

Optionally, the at least one feature is selected from a group including a length of a diagonal of the rectangle and an angle of the diagonal.

Optionally, the multi-point interaction is performed with at least two like user interactions.

Optionally, the at least two like user interactions are selected from a group including: at least two fingertips, at least two like styluses and at least two like tokens.

Optionally, the at least two like user interactions interact with the digitizer sensor by touch, hovering, or both touch and hovering.

Optionally, the outputs detected are ambiguous with respect to the location of at least one of the at least two user interactions.

Optionally, one of the at least two user interactions is stationary during the multi-point interaction.

Optionally, the method comprises identifying the location of the stationary user interaction; and tracking the location of the other user interaction based on knowledge of the location of the stationary user interaction.

Optionally, the location of the stationary user interaction is a substantially stationary corner of a rectangular region with dimensions defined by the extent of the possible interaction locations.

Optionally, the method comprises detecting a location of a first user interaction from the at least two user interactions in response to that user interaction appearing before the other user interaction; and tracking locations of each of the two user interactions based on the detected location of the first user interaction.

Optionally, interaction performed by the first user interaction changes a functionality of interaction performed by the other user interaction.

Optionally, the digitizer sensor is formed by a plurality of conductive lines arranged in a grid.

Optionally, the outputs are a single array of outputs for each axis of the grid.

Optionally, the outputs are detected by a capacitive detection.

Optionally, the location of the stationary interaction is a substantially stationary corner of a rectangular region with dimensions defined by the extent of possible interaction locations of the multi-point interaction.

Optionally, the method comprises detecting a location of a first interaction from the at least two user interactions in response to that interaction appearing before the other interaction; and tracking locations of each of the two interactions based on the detected location of the first user interaction.

Optionally, the first interaction changes a functionality of the other interaction.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is an exemplary simplified block diagram of a single-point digitizer system in accordance with some embodiments of the present invention;
FIG. 2 is an exemplary circuit diagram for fingertip detection on the digitizer system of Fig. 1, in accordance with some embodiments of the present invention;
FIG. 3 shows an array of conductive lines of the digitizer sensor as input to differential amplifiers in accordance with some embodiments of the present invention;
FIGs. 4A-4D are simplified representations of outputs in response to interactions at one or more positions on the digitizer in accordance with some embodiments of the present invention;
FIGs. 5A and 5B are simplified representations of outputs responsive to multipoint interaction detected on only one axis of the grid in accordance with some embodiments of the present invention;
FIG. 6 is an exemplary defined multi-point region selected in response to multi-point interaction shown with simplified representation of outputs in accordance with some embodiments of the present invention;
FIG. 7 shows an exemplary defined multi-point region selected in response to multi-point interaction detected from exemplary outputs of the single-point digitizer in accordance with some embodiments of the present invention;
FIGs. 8A-8C is a schematic illustration of user interaction movement when performing a multi-point gesture associated with zooming in, in accordance with some embodiments of the present invention;
FIGs. 9A-9C show exemplary defined multi-point regions selected in response to outputs obtained when performing the gesture command for zooming in, in accordance with some embodiments of the present invention;
FIGs. 10A-10C is a schematic illustration of user interaction movement when performing a multi-point gesture associated with zooming out, in accordance with some embodiments of the present invention;
FIGs. 11A-11C show exemplary defined multi-point regions selected in response to outputs obtained when performing the gesture command for zooming out, in accordance with some embodiments of the present invention;
FIGs. 12A-12C is a schematic illustration of user interaction movement when performing a multi-point gesture associated with scrolling down, in accordance with some embodiments of the present invention;
FIGs. 13A-13C are exemplary defined multi-point regions selected in response to outputs obtained when performing the gesture command for scrolling down, in accordance with some embodiments of the present invention;
FIGs. 14A-14C are schematic illustrations of user interaction movement when performing a clock-wise rotation gesture in accordance with some embodiments of the present invention;
FIGs. 15A-15C are exemplary defined multi-point regions selected in response to outputs obtained when performing a clockwise rotation gesture in accordance with some embodiments of the present invention;
FIGs. 16A-16C are schematic illustrations of user interaction movement when performing a counter clockwise rotation gesture with one stationary point in accordance with some embodiments of the present invention;
FIGs. 17A-17C are exemplary defined multi-point regions selected in response to outputs obtained when performing a counter clockwise rotation gesture with one stationary point in accordance with some embodiments of the present invention;
FIGs. 18A-18C are schematic illustrations of user interaction movement when performing a clockwise rotation gesture with one stationary point in accordance with some embodiments of the present invention;
FIGs. 19A-19C are exemplary defined multi-point regions selected in response to outputs obtained when performing a clockwise rotation gesture with one stationary point in accordance with some embodiments of the present invention;
FIG. 20 illustrates a digitizer sensor receiving an input from a user interaction over one portion of the digitizer sensor and receiving a multi-point gesture input over another non-interfering portion of the digitizer sensor in accordance with some embodiments of the present invention; and
FIG. 21 is a simplified flow chart of an exemplary method for detecting a multi-point gesture on a single a single-point detection digitizer.

### DESCRIPTION OF SPECIFIC EMBODIMENTS OF THE INVENTION

The present invention, in some embodiments thereof, relates to digitizer sensors and more particularly, but not exclusively to multi-point interaction with digitizer sensors, including single-point digitizer sensors.

An aspect of some embodiments of the present invention provides for multipoint and/or multi-touch functionality on a single-touch detection digitizer. According to some embodiments of the present inventions there are provided methods for recognizing multi-point and/or multi-touch input on a single-touch detection digitizer. Examples of multi-point functionality input include multi-touch gestures and multi-touch modifier command.

According to some embodiments of the present invention, there are provided methods of recognizing multi-point and/or multi-touch gesture input to a digitizer sensor.

Gestures are typically pre-defined interaction patterns associated with pre-defined inputs to the host system. The pre-defined inputs to the host system are typically commands to the host system, e.g. zoom, scroll, and/or delete commands. Multi-touch and/or multi-point gestures are gestures that are performed with at least two user interactions simultaneously interacting with a digitizer sensor. Gestures are optionally defined as multi-point and/or multi-touch gestures so that they can be easily differentiated from regular interactions with the digitizer that are typically performed with a single user interaction. Furthermore, gestures are purposeful interactions that would not normally be made inadvertently in the normal course of interaction with the digitizer. Typically, gestures provide for an intuitive interaction with the host system. As used herein, a gesture and/or gesture event is as a pre-defined interaction pattern performed by a user that is pre-mapped to a specific input to a host system. Typically, the gesture is an interaction pattern that is otherwise not accepted as valid input to the host. The pattern of interaction may include touch and/or hover interaction. As used herein a multi-touch gesture is defined as a gesture where the pre-defined interaction pattern includes simultaneous interaction with at least two same or different user interactions.

According to some embodiments of the present invention, methods are provided for recognizing multi-point gestures and/or providing multi-point functionality without requiring locating and/or tracking positions of each of the user interactions simultaneously interacting with the digitizer sensor. In some exemplary embodiments of the present invention, the methods provided herein can be applied to single-point and/or single-touch detection digitizer systems and/or single-touch touch screens.

An example of such a system is a grid based digitizer system that provides a single array of output for each axis of the grid, e.g. an X and Y axis. Typically, in such a system the position of a user interaction is determined by matching output detected along one axis, e.g. X axis with output along the other axis, e.g. Y axis of the grid. In some exemplary embodiments, when more than one user interaction invokes a like signal in more than one location on the digitizer system, it may be unclear how to differentiate between outputs obtained from the user interactions and to determine positioning of each user interaction. The different outputs obtained along the X and Y axes provide for a few possible coordinates defining the interaction locations and therefore the true positions of the user interactions cannot always be unambiguously determined.

According to some embodiments of the present invention, there is provided a method for recognizing pre-defined multi-point gestures based on tracking and analysis of a defined multi-point region that encompasses a plurality of interaction locations detected on the digitizer sensor.

According to some embodiments of the present invention, the multi-point region is a region incorporating all the possible interaction locations based on the detected signals. In some exemplary embodiments, the multi-point region is defined as a rectangular region including all interactions detected along both the X and Y axis. In some exemplary embodiments, the dimensions of the rectangle are defined using the resolution of the grid. In some exemplary embodiments, interpolation is performed to obtain a more accurate estimation of the multi-point region.

According to some embodiments of the present invention, one or more parameters and/or features of the multi-point region is determined and used to recognize the gesture. Typically, changes in the parameters and features are detected and compared to changes of pre-defined gestures. In some exemplary embodiments, the position and/or location of the multi-point region is determined. "Position" may be defined based on a determined center of the multi-point region and/or based on a pre-defined corner of the multi-point region, e.g. when the multi-point region is defined as a rectangle. In some exemplary embodiments, the position of the multipoint region is tracked and the pattern of movement is detected and used as a feature to recognize the gesture. In some exemplary embodiments, the shape of the multipoint region is determined and changes in the shape are tracked. Parameters of shape that may be detected include size of multi-point region, aspect ratio of the multi-point region, the length and orientation of a diagonal of the multi-point region, e.g. when the multi-point region is defined as a rectangle. In some exemplary embodiments, gestures that include a user interaction performing a rotational movement are recognized by tracking the length and orientation of the diagonal. In some exemplary embodiments, the time period over which the multi-point interaction occurred is determined and used as a feature to recognize the gesture. In some exemplary embodiments, the time period of an appearance, disappearance and reappearance is determined and used to recognize a gesture, e.g. a double tap gesture performed with two fingers. It is noted, that gestures can be defined based on hover and/or touch interaction with the digitizer.

Although, multi-point gestures are interactions that are performed simultaneously, a multi-point gesture may be preceded by one interaction may appear slightly before another interaction. In some exemplary embodiments, the system initiates a delay in transmitting information to the host, before determining if a single interaction is part of a gesture or if it is a regular interaction with the digitizer sensor. In some exemplary embodiments, the recognition of the gesture is sensitive to features and/or parameters of the first appearing interaction. In some exemplary embodiments, gestures differentiated by direction of rotation can be recognized by determining first interaction location.

According to some embodiments of the present invention, one or more features and/or parameter of the gestures may be defined to be indicative of a parameter of the command associated with gesture. For example the speed and/or acceleration in which a scroll gestures is performed may be used to define the speed of scrolling. Another example may include determining the direction of movement of a scroll gesture to determine the direction of scrolling intended by the user.

According to some embodiments of the present invention, multi-point interaction input that can be recognized includes modifier commands. A modifier command is used to modify a functionality provided by a single interaction in response to detection of a second interaction on the digitizer sensor. Typically, the modification in response to detection of a second interaction is a pre-defined modification. In some exemplary embodiments, the second interaction is stationary over a pre-defined time period. In some exemplary embodiments of the present invention, in response to detecting one stationary point, e.g. a corner of a multi-point region over the course of a multi-point interaction, a modifier command is recognized. In some exemplary embodiments, a modifier commands is used to modify functionality of a gesture.

According to some embodiments of the present invention, the digitizer system includes a gesture recognition engine operative to recognize gestures based on comparing detected features of the interaction to saved features of pre-defined gestures. In some exemplary embodiments, in response to recognizing a gesture, but prior to executing command associated with gesture, a confirmation is requested. In some exemplary embodiments, the confirmation is provided by performing a gesture.

According to some embodiments of the present invention, a gesture event is determined when more than one interaction location is detected at the same time. In some exemplary embodiments, a gesture event may include a single interaction occurring slightly before and/or after the multiple interaction, e.g. within a pre-defined period.

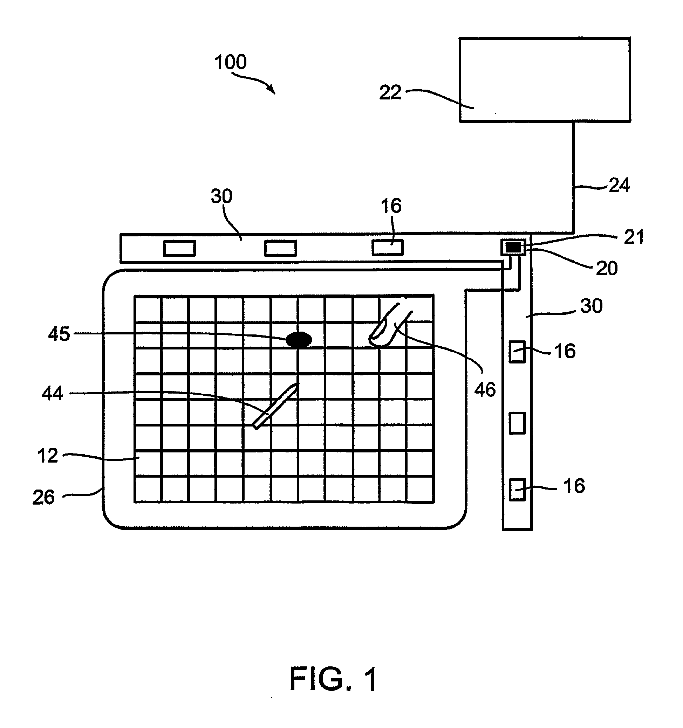

Referring now to the drawings, Fig. 1 illustrates an exemplary simplified block diagram of a digitizer system in accordance with some embodiments of the present invention. The digitizer system 100 may be suitable for any computing device that enables touch input between a user and the device, e.g. mobile and/or desktop and/or tabletop computing devices that include, for example, FPD screens. Examples of such devices include Tablet PCs, pen enabled lap-top computers, tabletop computer, PDAs or any hand held devices such as palm pilots and mobile phones or other devices. According to some embodiments of the present invention, the digitizer system is a single-point digitizer system. As shown in Fig. 1, digitizer system 100 comprises a sensor 12 including a patterned arrangement of conductive lines, which is optionally transparent, and which is typically overlaid on a FPD. Typically sensor 12 is a grid based sensor including horizontal and vertical conductive lines.

According to some embodiments of the present invention, circuitry is provided on one or more PCB(s) 30 positioned around sensor 12. According to some embodiments of the present invention PCB 30 is an 'L' shaped PCB. According to some embodiments of the present invention, one or more ASICs 16 positioned on PCB(s) 30 comprises circuitry to sample and process the sensor's output into a digital representation. The digital output signal is forwarded to a digital unit 20, e.g. digital ASIC unit also on PCB 30, for further digital processing. According to some embodiments of the present invention, digital unit 20 together with ASIC 16 serves as the controller of the digitizer system and/or has functionality of a controller and/or processor. Output from the digitizer sensor is forwarded to a host 22 via an interface 24 for processing by the operating system or any current application.

According to some embodiments of the present invention, digital unit 20 together with ASIC 16 includes memory and/or memory capability. Memory capability may include volatile and/or non-volatile memory, e.g. FLASH memory. In some embodiments of the present invention, the memory unit and/or memory capability, e.g. FLASH memory is a unit separate from the digital unit 20 but in communication with digital unit 20. According to some embodiments of the present invention digital unit 20 includes a gesture recognition engine 21 operative for detecting a gesture interaction and recognizing gestures that match pre-defined gestures. According to some embodiments of the present invention, memory included and/or associated with digital unit 20 includes a database, one or more tables and/or information characterizing one or more pre-defined gestures. Typically, during operation, gesture recognition engine 21 accesses information from memory for recognizing detected gesture interaction.

According to some embodiments of the present invention, sensor 12 comprises a grid of conductive lines made of conductive materials, optionally Indium Tin Oxide (ITO), patterned on a foil or glass substrate. The conductive lines and the foil are optionally transparent or are thin enough so that they do not substantially interfere with viewing an electronic display behind the lines. Typically, the grid is made of two layers, which are electrically insulated from each other. Typically, one of the layers contains a first set of equally spaced parallel conductive lines and the other layer contains a second set of equally spaced parallel conductive lines orthogonal to the first set. Typically, the parallel conductive lines are input to amplifiers included in ASIC 16. Optionally the amplifiers are differential amplifiers.

Typically, the parallel conductive lines are spaced at a distance of approximately 2-8 mm, e.g. 4mm, depending on the size of the FPD and a desired resolution. Optionally the region between the grid lines is filled with a nonconducting material having optical characteristics similar to that of the (transparent) conductive lines, to mask the presence of the conductive lines. Optionally, the ends of the lines remote from the amplifiers are not connected so that the lines do not form loops. In some exemplary embodiments, the digitizer sensor is constructed from conductive lines that form loops.

Typically, ASIC 16 is connected to outputs of the various conductive lines in the grid and functions to process the received signals at a first processing stage. As indicated above, ASIC 16 typically includes an array of amplifiers to amplify the sensor's signals. Additionally, ASIC 16 optionally includes one or more filters to remove frequencies that do not correspond to frequency ranges used for excitation and/or obtained from objects used for user touches. Optionally, filtering is performed prior to sampling. The signal is then sampled by an A/D, optionally filtered by a digital filter and forwarded to digital ASIC unit 20, for further digital processing. Alternatively, the optional filtering is fully digital or fully analog.

According to some embodiments of the invention, digital unit 20 receives the sampled data from ASIC 16, reads the sampled data, processes it and determines and/or tracks the position of physical objects, such as a stylus 44 and a token 45 and/or a finger 46, and/or an electronic tag touching and/or hovering the digitizer sensor from the received and processed signals. According to some embodiments of the present invention, digital unit 20 determines the presence and/or absence of physical objects, such as stylus 44, and/or finger 46 over time. In some exemplary embodiments of the present invention, hovering of an object, e.g. stylus 44, finger 46 and hand, is also detected and processed by digital unit 20. According to embodiments of the present invention, calculated position and/or tracking information is sent to the host computer via interface 24. According to some embodiments of the present invention, digital unit 20 is operative to differentiate between gesture interaction and other interaction with the digitizer and to recognize a gesture input. According to embodiments of the present invention, input associated with a recognized gesture is sent.to the host computer via interface 24.

According to some embodiments of the invention, host 22 includes at least a memory unit and a processing unit to store and process information obtained from ASIC 16, digital unit 20. According to some embodiments of the present invention memory and processing functionality may be divided between any of host 22, digital unit 20, and/or ASIC 16 or may reside in only host 22, digital unit 20 and/or there may be a separated unit connected to at least one of host 22, and digital unit 20. According to some embodiments of the present invention, one or more tables and/or databases may be stored to record statistical data and/or outputs, e.g. patterned outputs of sensor 12, sampled by ASIC 16 and/or calculated by digitizer unit 20. In some exemplary embodiments, a database of statistical data from sampled output signals may be stored.

In some exemplary embodiments of the invention, an electronic display associated with the host computer displays images. Optionally, the images are displayed on a display screen situated below a surface on which the object is placed and below the sensors that sense the physical objects or fingers. Typically, interaction with the digitizer is associated with images concurrently displayed on the electronic display.

### Stylus and Object Detection and Tracking

According to some embodiments of the invention, digital unit 20 produces and controls the timing and sending of a triggering pulse to be provided to an excitation coil 26 that surrounds the sensor arrangement and the display screen. The excitation coil provides a trigger pulse in the form of an electric or electromagnetic field that excites passive circuitry, e.g. passive circuitry, in stylus 44 or other object used for user touch to produce a response from the stylus that can subsequently be detected. In some exemplary embodiments, stylus detection and tracking is not included and the digitizer sensor only functions as a capacitive sensor to detect the presence of fingertips, body parts and conductive objects, e.g. tokens.

### Fingertip Detection

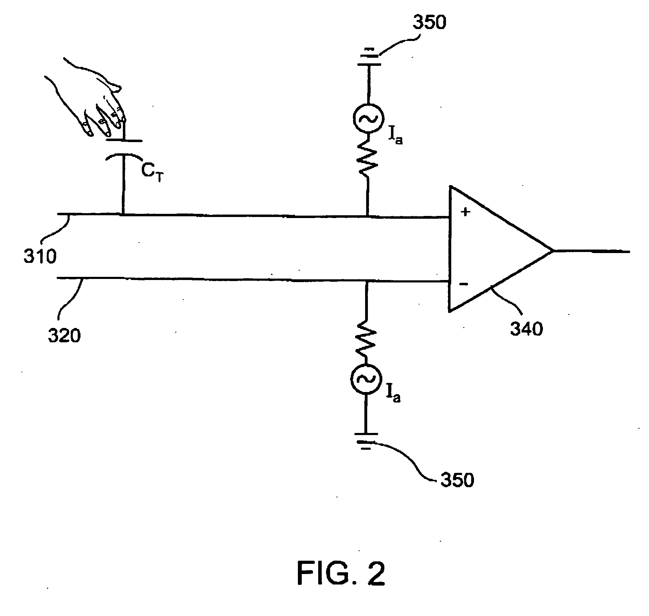

Reference is now made to Fig. 2 showing an exemplary circuit diagram for touch detection according to some embodiments of the present invention. Conductive lines 310 and 320 are parallel non-adjacent lines of sensor 12. According to some embodiments of the present invention, conductive lines 310 and 320 are interrogated to determine if there is a finger. To query the pair conductive lines, a signal source Iₐ, e.g. an AC signal source induces an oscillating signal in the pair. Signals are referenced to a common ground 350. When a finger is placed on one of the conductive lines of the pair, a capacitance, C_{T}, develops between the finger and conductive line 310. As there is a potential between the conductive line 310 and the user's finger, current passes from the conductive line 310 through the finger to ground. Consequently a potential difference is created between conductive line 310 and its pair 320, both of which serve as input to differential amplifier 340.

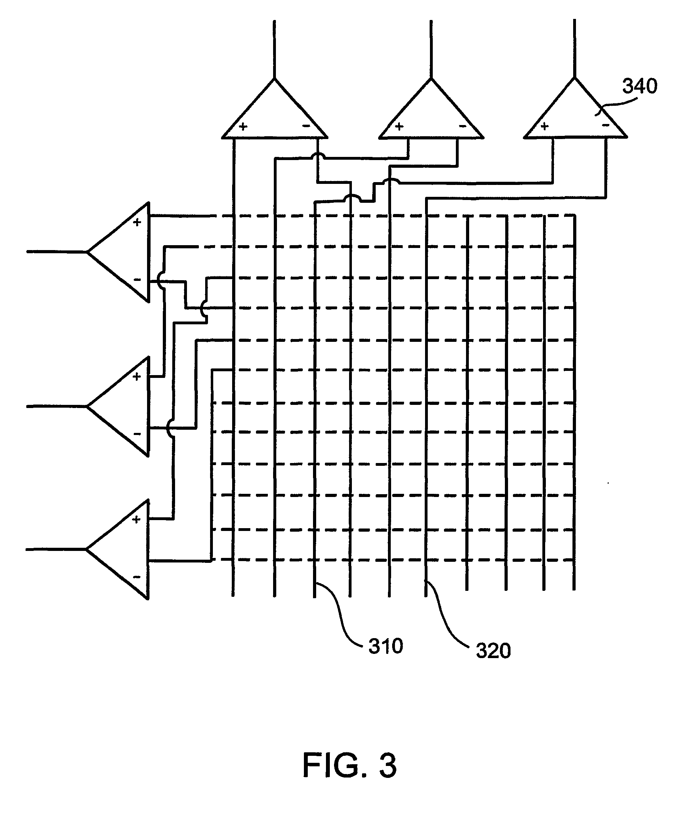

Reference is now made to Fig. 3 showing an array of conductive lines of the digitizer sensor as input to differential amplifiers according to embodiments of the present invention. Separation between the two conductors 310 and 320 is typically greater than the width of the finger so that the necessary potential difference can be formed, e.g. approximately 12mm or 8mm-30mm. The differential amplifier 340 amplifies the potential difference developed between conductive lines 310 and 320 and ASIC 16 together with digital unit 20 process the amplified signal and thereby determine the location of the user's finger based on the amplitude and/or signal level of the sensed signal. In some examples, the location of the user's finger is determined by examining the phase of the output. In some examples, since a finger touch typically produces output in more than one conductive line, the location of the user's finger is determined by examining outputs of neighboring amplifiers. In yet other examples, a combination of both methods may be implemented. According to some embodiments, digital processing unit 20 is operative to control an AC signal provided to conductive lines of sensor 12, e.g. conductive lines 310 and 320. Typically a fingertip touch on the sensor may span 2-8 lines, e.g. 6 conductive lines and/or 4 differential amplifier outputs. Typically, the finger is placed or hovers over a number of conductive lines so as to generate an output signal in more than one differential amplifier, e.g. a plurality of differential amplifier's. However, a fingertip touch may be detected when placed over one conductive line.

The present invention is not limited to the technical description of the digitizer system described herein. Digitizer systems used to detect stylus and/or finger touch location may be, for example, similar to digitizer systems described in U.S. Patent No. 6,690,156, U.S. Patent No. 7,292,229 and/or U.S. Patent No. 7,372,455. The present invention may also be applicable to other digitized sensor and touch screens known in the art, depending on their construction. In some exemplary embodiment, a digitizer system may include two or more sensors. For example, one digitizer sensor may be configured for stylus detecting and/or tracking while a separate and/or second digitizer sensor may be configured for finger and/or hand detection. In other exemplary embodiments, portions of a digitizer sensor may be implemented for stylus detection and/or tracking while a separate portion may be implemented for finger and/or hand detection.

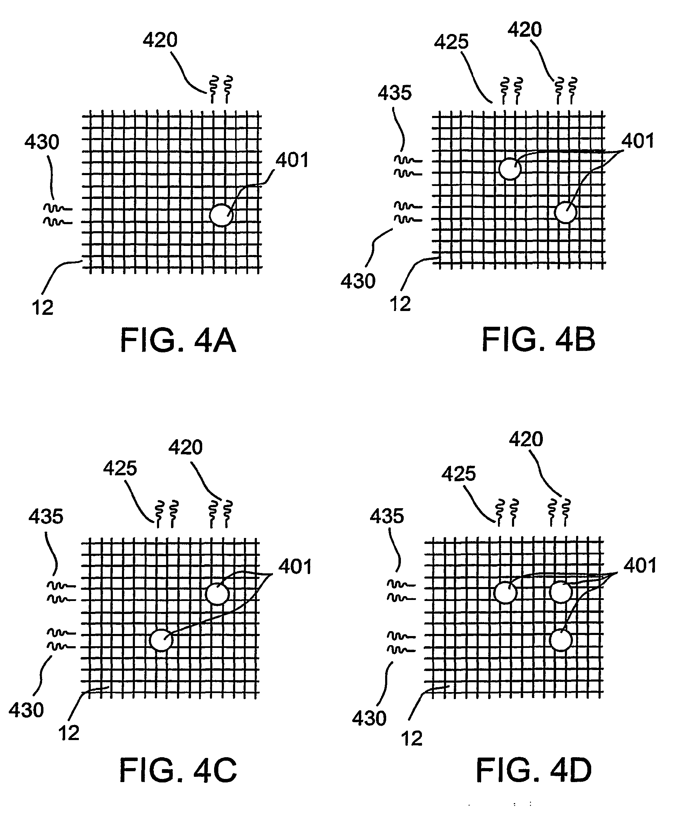

Reference is now made to Fig. 4A-4D showing simplified representations of outputs from a digitizer in response to interaction in one or more position on the digitizer in accordance with some embodiments of the present invention. In Fig. 4A, in response to one finger interacting with the digitizer over a location 401, representative output 420 on the X axis and 430 on the Y axis is obtained from the vertical and horizontal conductive lines of the digitizer sensor 12 sensing the interaction. The coordinates of the finger interaction corresponds to the location along the X and Y axis from which output is detected and can be unambiguously determined. When two or more fingers simultaneously interact with the digitizer sensor ambiguity as to the location of each interaction may result. Figs. 4B-4D show representative ambiguous output obtained from three different scenarios of multipoint. Although in each of Figs. 4B-4D, the location of interactions 401 and/or the number of simultaneous interactions 401 is different, the outputs 420 and 425 obtained along the X axis and the outputs 430 and 435 obtained along the Y axis are the same. This is because the same conductive lines along the X and Y axis are affected for the three scenarios shown. As such, the position of each of interactions 401 cannot be unambiguously determined based on outputs 420, 425, 430 and 435.

Although, the positions of multi-point interaction cannot be unambiguously determined, a multi-point interaction can be unambiguously differentiated from a single-touch interaction. According to some embodiments of the present invention, in response to detecting multiple interaction locations along at least one axis of the grid, e.g. output 420 and 425 and/or output 430 and 435, a multi-point interaction is determined.

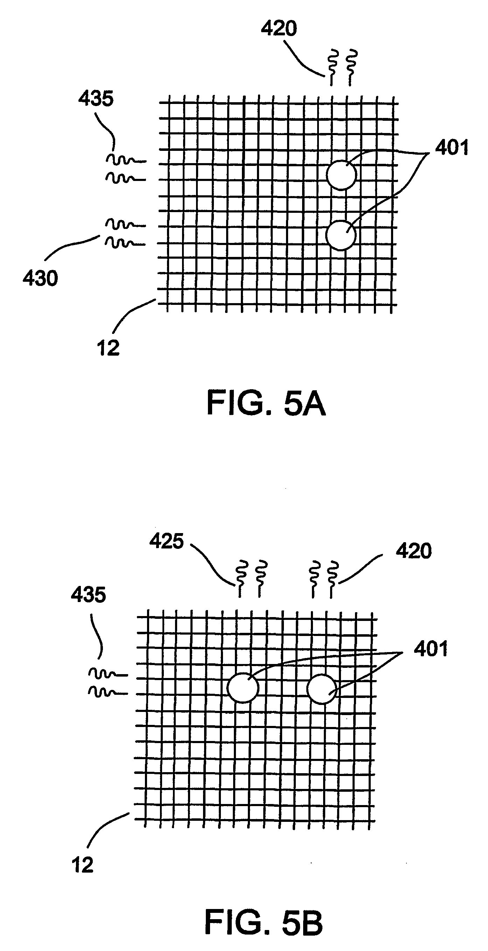

Reference is now made to Figs. 5A-5B showing output responsive to multipoint interaction detected on only one axis of the grid. In Fig. 5A multi-point interactions 410 is detected only on the output from the horizontal conductive lines, the X axis, since the Y coordinate (in the vertical direction) is the same for both interactions. In Fig. 5A multi-point interactions 410 is detected only on the output from the vertical conductive lines, the Y axis, since the X coordinate (in the horizontal direction) is the same for both interactions. In Fig. 5B multi-point interactions 410 is detected only on the output from the horizontal conductive lines, the X axis, since the Y coordinate (in the vertical direction) is the same for both interactions. According to embodiments of the present invention, multi-point interaction will be detected in the scenarios shown in Figs. 5A-5B since two interaction locations were detected along at least one axis of the grid.

According to some embodiments of the present invention, a multi-point interaction event is determined in response to detecting at least two interaction locations on at least one axis of the digitizer sensor. According to some embodiments of the present invention, multi-point gestures are recognized from single array outputs (one dimensional output) obtained from each axis of digitizer sensor 12. According to some embodiments of the present invention a multi-point gesture is recognized by defining a multi-point region of a multi-point interaction that includes all possible interaction locations that can be derived from the detected output and tracking the multi-point region and changes to the multi-point region over time. According to some embodiments of the present invention, temporal features of the multi-point region are compared to temporal features of pre-defined gestures that are stored in the digitizer system's memory.

According to some embodiments of the present invention, interaction locations that can be derived from the detected output are directly tracked and temporal and/or spatial features of the interactions are compared to temporal and/or spatial features of the pre-defined gestures that are stored in the digitizer's memory. In some exemplary embodiments, all interaction locations that can be derived from the detected output are tracked. In some embodiments, only a portion of the interaction locations, e.g. a pair of interaction locations, are tracked. In some exemplary embodiments, a pair of interaction locations is chosen for tracking, where the chosen pair may either represent the true interaction locations or ghost interaction locations. The ambiguity in determining location of each user interaction is due to the output corresponding to the ghost interaction location and the true interaction locations. In such a case, an assumption may be made changes in the interaction locations may be similar for the ghost pair and the true pair.

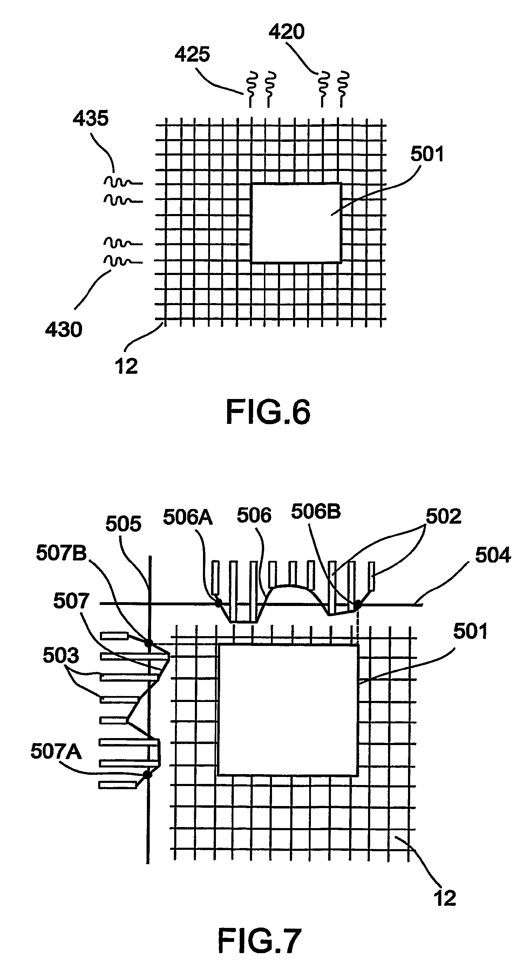

Reference is now made to Fig. 6 showing an exemplary multi-point region selected in response to multi-point interaction shown as simplified representation of outputs in accordance with some embodiments of the present invention. According to some embodiments of the present invention, a multi-point region 501 on digitizer sensor 12 is defined that incorporates all possible interaction locations from detected outputs 430 and 435 detected on the horizontal conductive lines and outputs 420 and 425 detected on the vertical conductive lines. According to some embodiments of the present invention, the position and dimensions of the rectangle are defined by the two most distanced outputs on each axis. According to some embodiments of the present invention, the position, size and shape of multi-point region 501 may change over time in response to interaction with the digitizer and changes in the multi-point region are detected and/or recorded. In some exemplary embodiments, the presence and disappearance of a multi-point interaction, e.g. the time periods associated with the presence and disappearance, is detected and/or recorded. According to some embodiments of the present invention detected changes in size, shape, position and/or appearance are compared to recorded changes in size, shape, position and/or appearance of pre-defined gestures. If a match is found, the gesture is recognized.

Reference is now made to Fig. 7 showing an exemplary multi-point region selected in response to multi-point interaction detected from exemplary outputs of the digitizer in accordance with some embodiments of the present invention. Typically, output from the digitizer in response to user interaction is spread across a plurality of lines and includes signals with varying amplitudes. According to some embodiments of the present invention, outputs 502 and 503 represent amplitudes of signals detected on individual lines of digitizer 12 in the horizontal and vertical axis. Typically detection is determined for output above a pre-defined threshold. According to some embodiments of the present invention, thresholds 504 and 505 are pre-defined for each axis. In some exemplary embodiments, a threshold is defined for each of the lines. In some exemplary embodiments, one threshold is defined for all the lines in the X and Y axis.

According to some embodiments of the present invention, multi-point interaction along an axis is determined when at least two sections along an axis include output above the defined threshold separated by at least one section including output below the defined threshold. In some exemplary embodiments, the section including output below the defined threshold is required to including output from at least two contiguous conductive lines. Typically, this requirement is introduced to avoid multi-point detection in situations when a single user interaction interacts with two lines of the digitizer that are input to the same differential amplifier. In such a case the signal on the line may is canceled (Fig. 2).

According to some embodiments of the present invention, the multi-point region of detection may be defined as bounded along discrete grid lines from which interaction is detected (Fig. 6). According to some embodiments of the present invention, output from each array of conductive lines is interpolated, e.g. by linear, polynomial and/or spline interpolation to obtain a continuous output curves 506 and 507. In some exemplary embodiments, output curves 506 and 507 are used to determine boundaries of multi-point regions at a resolution above the resolution of the grid lines. In some exemplary embodiments, the multi-point region 501 of detection may be defined as bounded by points on output curves 506 and 507 from which detection is terminated, e.g. points 506A and 506B on X axis and points 507A and 507B on Y axis.

In some exemplary embodiments of the present invention, during a multi-point interaction event, a new multi-point region is determined each time the digitizer sensor 12 is sampled. In some exemplary embodiments, a multi-point region is defined at pre-defined intervals within a multi-point interaction gesture. In some exemplary embodiments, a multi-point region is defined at pre-defined intervals with respect to the duration of the multi-point interaction gesture, e.g. the beginning end and middle of the multi-point interaction gesture. According to some embodiments of the present invention, features of the multi-point regions and/or changes in features of the multi-point regions are determined and/or recorded. According to some embodiments of the present invention, features of the multi-point regions and/or changes in features of the multi-point regions are compared to stored features and/or changes in features of pre-defined gestures.

According to some embodiments of the present invention, there is provided a method for detecting multi-input interactions with a digitizer including a single-point interaction gesture performed simultaneously with single-touch interaction with the digitizer. According to some embodiments of the present invention, the single-touch gesture is a pre-defined dynamic interaction associated with a pre-defined command while the single-touch interaction is a stationary interaction with the digitizer, e.g. a selection associated with a location on the graphic display. According to some embodiments of the present invention, single interaction gesture performed simultaneously with single-point interaction with the digitizer can be detected when one point of the multi-point region, e.g. one corner of the rectangle, is stationary while the multi-point region is altered over the course of the multi-point interaction event. According to some embodiments of the present invention, in response to detecting one stationary corner, e.g. one fingertip positioned on a stationary point it is possible to unambiguously determine positions of the stationary interaction and the dynamic interaction. According to some embodiments of the present invention, in such a situation the stationary point is treated as regular and/or direct input to the digitizer, while temporal changes to the multi-point region is used to recognize the associated gesture. Location of the stationary point may be determined and used as input to the host system. An exemplary application of a single-touch gesture performed simultaneously with single-touch interaction may be a user selecting a letter on a virtual keyboard using one finger while performing a pre-defined 'a cap-lock command' gesture with another finger. The pre-defined gesture may be for example, a back and forth motion, circular motion, and/or a tapping motion.

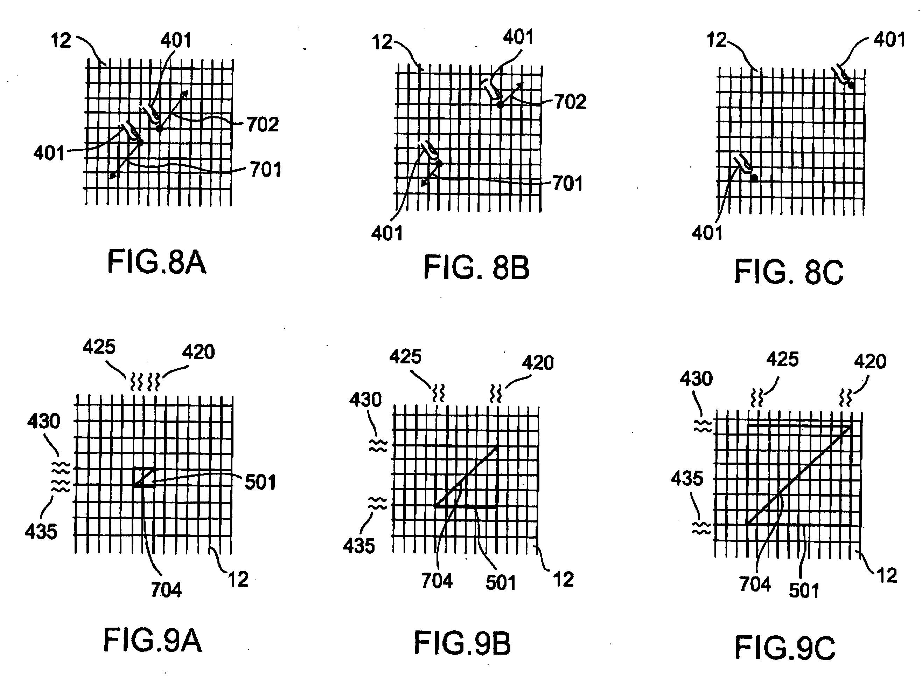

Reference is now made to Figs. 8A-8C showing a schematic illustration of user interaction movement when performing a multi-point gesture associated with zooming in, and to Figs. 9A-9C showing exemplary defined multi-point regions selected in response to outputs obtained when performing the gesture command for zooming in, in accordance with some embodiments of the present invention. According to some embodiments of the present invention, a 'zoom in' gesture is performed by placing two fingers 401, e.g. from two different hands or from one hand, on or over digitizer sensor 12 and then moving them outwards in opposite directions shown by arrows 701 and 702. Figs. 8A-8C show three time slots for the gesture corresponding to beginning (Fig. 8A) middle (Fig. 8B) and end (Fig. 8C) respectively of the gesture event. According to some embodiments of the present invention, corresponding outputs 420, 425, 430, 435 (Fig. 9A-9C) are obtained during each of the time slots and are used to define a multi-point region 501. According to some embodiments of the present invention, one or more features of multi-point region 501 over the course of the gesture event are used to recognize the multi-point gesture. In some exemplary embodiments, the increase in the multi-point region from the start to end of the gesture is used as a feature. In some exemplary embodiment, the increase is size is determined based on calculated area of the multi-point region over the course of the gesture event. In some exemplary embodiments, the increase in size is determined based on increase in length of a diagonal 704 of the detected multi-point region over the course of the gesture event. In some exemplary embodiments, the center of the multi-point region during a 'zoom in' gesture is relatively stationary and is used as a feature to identify the 'zoom in' gesture. In some exemplary embodiments, the angle of the diagonal during a 'zoom in' gesture is relatively stationary and is used as a feature to identify the 'zoom in' gesture. Typically, a combination of these features is used to identify the gesture. In some exemplary embodiments, features required to recognize a 'zoom in' gesture include an increase in the size of multi-point region 501 and an approximately stationary center of multi-point region 501. Optionally, a substantially constant aspect ratio is also required. In some exemplary embodiments, features are percent changes based on an initial and/or final state, e.g. percent change of size and aspect ratio.

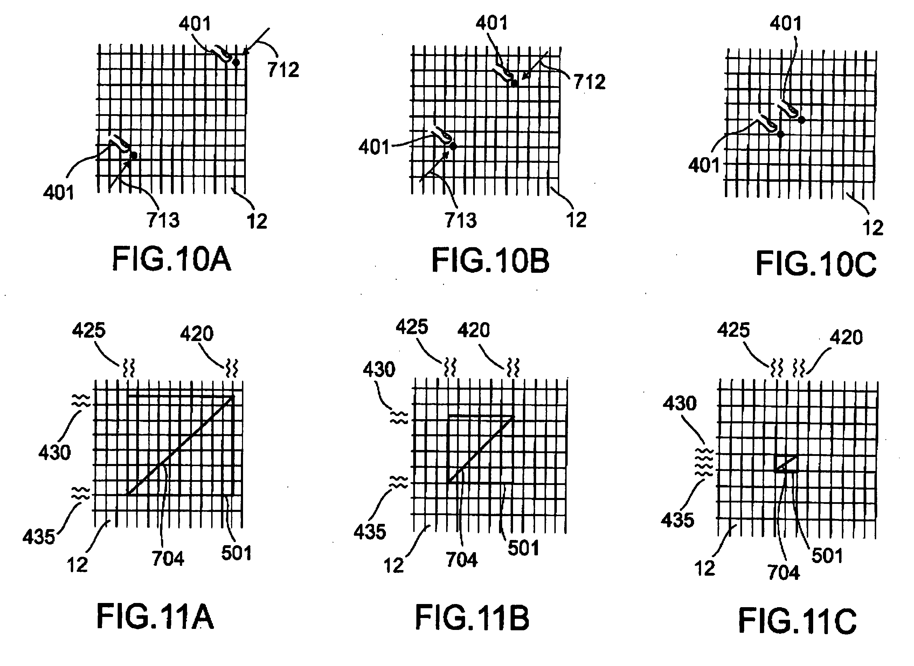

Reference is now made to Figs. 10A-10C showing a schematic illustration of user interaction movement when performing a multi-point gesture associated with zooming out, and to Figs. 11A-11C showing exemplary defined multi-point regions selected in response to outputs obtained when performing the gesture command for zooming out, in accordance with some embodiments of the present invention. According to some embodiments of the present invention, a 'zoom out' gesture is performed by placing two fingers 401 on or over digitizer sensor 12 and then moving them inwards in opposite directions shown by arrows 712 and 713. Figs. 10A-10C show three time slots for the gesture corresponding to beginning (Fig. 10A) middle (Fig. 10B) and end (Fig. 10C) respectively of the gesture event. According to some embodiments of the present invention, corresponding outputs 420, 425, 430, 435 (Fig. 11A-11C) are obtained during each of the time slots and are used to define a multipoint region 501.

According to some embodiments of the present invention, one or more features of multi-point region 501 over the course of the gesture event are used to recognize the multi-point gesture. In some exemplary embodiments, the decrease in the multi-point region from the start to end of the gesture is used as a feature. In some exemplary embodiment, the decrease is size is determined based on calculated area of the multipoint region over the course of the gesture event. In some exemplary embodiments, the decrease in size is determined based on decrease in length of a diagonal 704 of the detected multi-point region over the course of the gesture event. In some exemplary embodiments, the center of the multi-point region during a 'zoom out' gesture is relatively stationary and is used as a feature to identify the 'zoom out' gesture. In some exemplary embodiments, the angle of the diagonal during a 'zoom out' gesture is relatively stationary and is used as a feature to identify the 'zoom out' gesture. Typically, a combination of these features is used to identify the gesture.

According to some embodiments of the present invention, the detected size of multi-point region 501 and/or the length of diagonal 704 are normalized with respect to initial or final dimensions of multi-point region 501 and/or diagonal 704. In some exemplary embodiments, change in area may be defined as the initial area divided by the final area. In some exemplary embodiments, a change length of diagonal 704 may be defined as initial length of the diagonal 704 divided by the final length of diagonal 704. In some exemplary embodiments, digitizer system 100 translates the change in area and/or length to an approximate zoom level. In one exemplary embodiment a large change is interpreted as a large zoom level while a small change is interpreted in a small zoom level. In one exemplary embodiment, three zoom levels may be represented by small medium and large change. In some exemplary embodiments of the present invention, the system may implement a pre-defined zoom ratio for each new user and later calibrate the system based on corrected values offered by the user. In some exemplary embodiments, the zoom level may be separately determined based on subsequent input by the user and may not be derived from the gesture event. According to some embodiments of the present invention, the 'zoom in' and/or 'zoom out' gesture is defined as a hover gesture where the motion is performed with the two fingers hovering over the digitizer sensor.

In some exemplary embodiments, host 22 responds by executing 'zoom in' and/or 'zoom out' commands in an area surrounding the calculated center of the bounding rectangle. In some exemplary embodiments, host 22 responds by executing the commands in an area surrounding one corner of multi-point region 501. Optionally, the command is executed around a corner that was first touched. Optionally, host 22 responds by executing the commands in an area surrounding area 501 from which the two touch gesture began, e.g. the common area. In some exemplary embodiments, host 22 responds by executing the command in an area not related to the multi-point region but which was selected by the user prior to the gesture execution. In some exemplary embodiments, zooming is performed by positioning one user interaction at the point from which the zooming to be performed and the other user interaction moves toward or away from the station user interaction to indicate 'zoom out' or 'zoom in'.

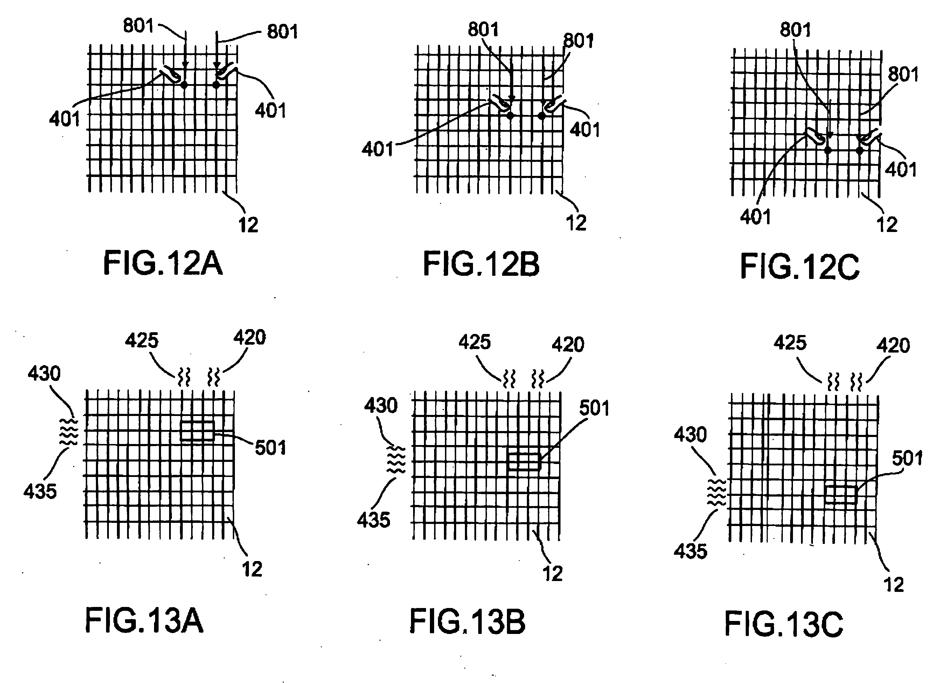

Reference is now made to Figs. 12A-12C showing a schematic illustration of user interaction movement when performing a multi-point gesture associated with scrolling down and to Figs. 13A-13C showing exemplary multi-point regions selected in response to outputs obtained when performing the gesture command for scrolling down, in accordance with some embodiments of the present invention.

According to some embodiments of the present invention, a 'scroll down' gesture is performed by placing two fingers 401 on or over the digitizer sensor 12 and then moving them downwards in a direction shown by arrows 801. Figs. 12A-12C show three time slots for the gesture corresponding to beginning (Fig. 12A) middle (Fig. 12B) and end (Fig. 12C) respectively of the gesture event. According to some embodiments of the present invention, corresponding outputs 420, 425, 430, 435 (Fig.13A-C) are obtained during each of the time slots and are used to define a different multi-point region 501. In some exemplary embodiments, only one output appears in either the horizontal or vertical conductive lines. According to some embodiments of the present invention, one or more features of multi-point region 501 over the course of the gesture event are used to recognize the multi-point gesture. In some exemplary embodiments, the displacement of the multi-point region from the start to end of the gesture is used as a feature. In some exemplary embodiment, the size is used as a feature and is tracked based on calculated area of the multi-point region over the course of the gesture event. Typically, the size of the multi-point region is expected to be maintained, e.g. substantially un-changed, during a 'scroll down' gesture. In some exemplary embodiments, the center of the multi-point region during a 'scroll down' gesture traces a generally linear path in a downward direction. In some exemplary embodiments, a combination of features is used to identify the gesture.

According to some embodiments of the present invention, a 'scroll up' gesture includes two fingers substantially simultaneously motioning in a common upward direction. Optionally, left and right scroll gestures are defined as simultaneous two fingers motion in a corresponding left and/or right direction. Optionally, a diagonal scroll gesture is defined as simultaneous two fingers motion in a diagonal direction. Typically, in response to a recognized scroll gesture, the display is scrolled in the direction of the movement of the two fingers.

In some exemplary embodiments of the present invention, the length of the tracking curve of the simultaneous motion of the two fingers in a common direction may be used as a parameter to determine the amount of scrolling desired and/or the scrolling speed. In one exemplary embodiment, a long tracking curve, e.g. spanning substantially the entire screen may be interpreted as a command to scroll to the limits of the document, e.g. beginning and/or end of the document (depending on the direction). In one exemplary embodiment, a short tracking curve, e.g. spanning less than 1/2 the screen, may be interpreted as a command to scroll to the next screen and/or page. Parameters of the scroll gesture may be pre-defined and/or user defined. In some exemplary embodiment, a scroll gesture is not time-limited, i.e. there is no pre-defined time limit for performing the gesture, the execution of the gesture continues as long as the user performs the scroll gesture. In some exemplary embodiment, once a scroll gesture is detected for a pre-defined time threshold, the scroll gesture can continue with only a single finger moving in the same direction of the two fingers. According to some embodiments of the present invention, scrolling may be performed using hover motion tracking such that the two fingers perform the gesture without touching the digitizer screen and/or sensor.

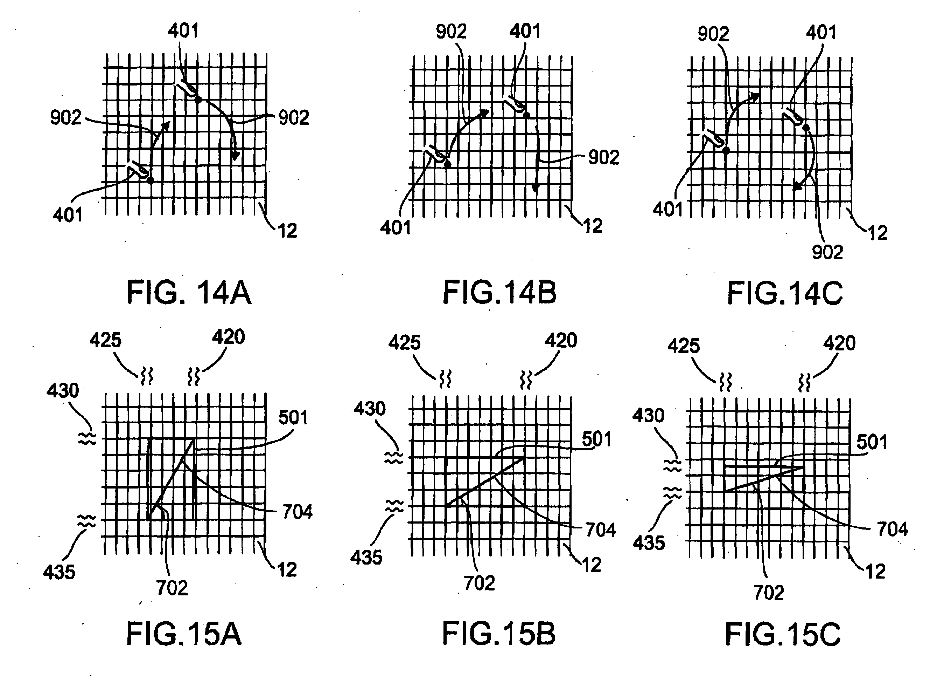

Reference is now made to Figs. 14A-14C showing schematic illustrations of user interaction movement when performing a clock-wise rotation gesture and Figs. 15A-15C showing exemplary defined multi-point regions selected in response to outputs obtained when performing a clock-wise rotation gesture in accordance with some embodiments of the present invention. According to some embodiments of the present invention, a clockwise rotation gesture is performed by placing two fingers 401 on or over the digitizer sensor 12 and then moving them in a clockwise direction in a direction shown by arrows 901 and 902 such that the center of rotation is approximately centered between fingers 401. Figs. 14A-C show three time slots for the gesture corresponding to beginning (Fig. 14A) middle (Fig. 14B) and end (Fig. 14C) respectively of the gesture event. According to some embodiments of the present invention, corresponding outputs 420, 425, 430, 435 (Fig. 15A-C) are obtained during each of the time slot and are used to define a multi-point region 501. According to some embodiments of the present invention, one or more features of multi-point region 501 over the course of the gesture event are used to recognize the multi-point gesture. In some exemplary embodiments, the change in size of the multipoint region from the start to end of the gesture is used as a feature. In some exemplary embodiments, changes in an angle 702 of diagonal 704 is determined and used to identify the gesture. Optionally, aspect ratio of the multi-point region is tracked and changes in the aspect ratio are used as a feature for recognizing a rotation gesture. Typically, size, aspect ratio and angle 702 of diagonal 704 are used to identify the rotation gesture.

According to some embodiments, additional information is required to distinguish a clockwise gesture from a counter-clockwise gesture since both clockwise and counter-clockwise gesture are characterized by similar changes in size, aspect ratio, and angle 702 of diagonal 704. Depending on the start positions of the fingers, the change may be an increase or a decrease in aspect ratio. In some exemplary embodiments, the ambiguity between clockwise gesture and a counter-clockwise gesture is resolved by requiring that one finger be placed prior to placing the second finger. It is noted that once one finger position is known the ambiguity in fingers position of a two finger interaction is resolved. In such a manner the position of each interaction may be traced and the direction of motion determined.

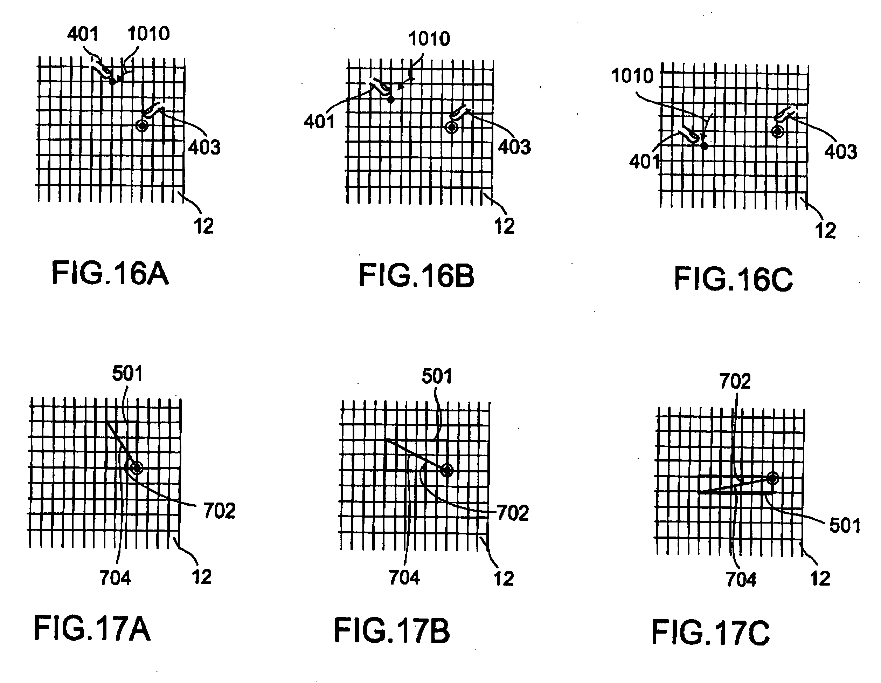

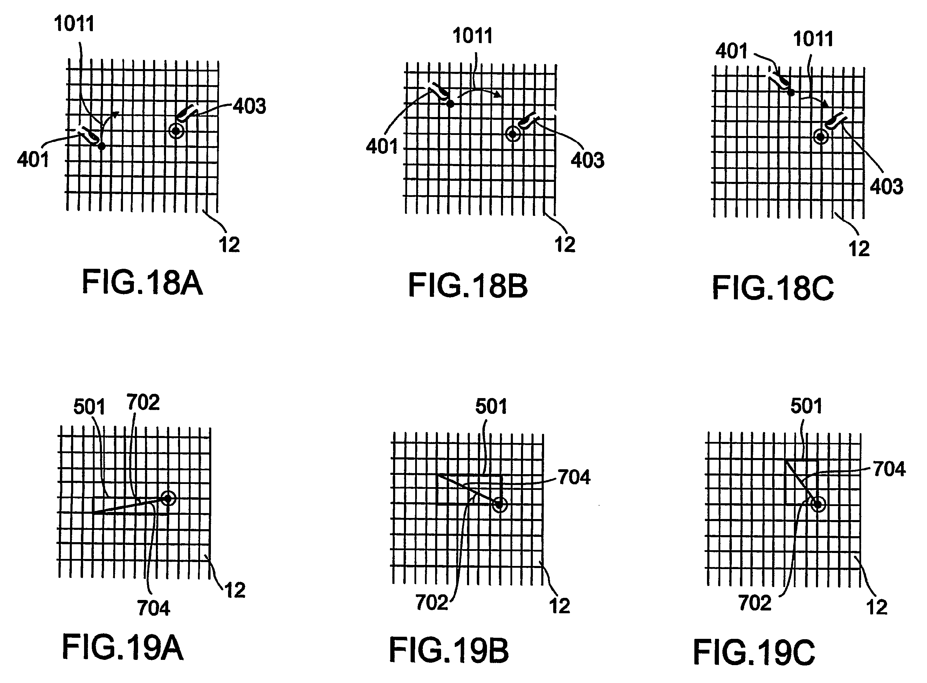

Reference is now made to Figs. 16A-16C showing schematic illustrations of user interaction movement when performing a counter clockwise rotation gesture with one stationary point and to Figures 17A-17C showing exemplary defined multi-point regions selected in response to outputs obtained when performing a counter clockwise rotation gesture with one stationary point in accordance with some embodiments of the present invention. Reference is also made to Figs. 18A-18C showing schematic illustrations of user interaction movement when performing a clockwise rotation gesture with one stationary point and to Figures 19A-19C showing exemplary defined multi-point regions selected in response to outputs obtained when performing a clockwise rotation gesture with one stationary point in accordance with some embodiments of the present invention According to some embodiments of the present invention, a rotation counter clockwise gesture is defined such that one finger 403 is held stationary on or over the digitizer sensor 12 while another finger 401 rotates in a counter clockwise direction on or over the digitizer sensor 12 (Fig. 16).

According to some embodiments of the present invention, defining a rotation gesture with two fingers where one is held stationary provides for resolving ambiguity between clockwise gesture and a counter-clockwise gesture. According to some embodiments of the present invention, a rotation gesture is defined such that one finger 403 is held stationary on or over the digitizer sensor 12 while another finger 401 rotates in a counter clockwise direction 1010 or a clockwise direction 1011 on or over the digitizer sensor 12. According to some embodiments of the present invention, the change in position of multi-point region 501 is used as a feature to recognize the direction of rotation. In some exemplary embodiments, the center of multi-point region 501 is determined and tracked. In some exemplary embodiments, a movement of the center to the left and downwards is used as a feature to indicates that the rotation is in the counter clockwise direction. Likewise, a movement of the center to the right and upwards is used as a feature to indicates that the rotation is in the clockwise direction.

According to some embodiments of the present invention, in response to a substantially stationary corner in the multi-point region, the stationary corner is determined to correspond to a location of a stationary user input. In some exemplary embodiments, the stationary location of finger 403 is determined and the diagonal 704 and its angle 702 is determined and tracked from the stationary location of finger 403. In some exemplary embodiments, the change in angle 702 is used as a feature to determine direction of rotation. In some exemplary embodiments, the center of rotation is defined as the stationary corner of the multi-point region. In some exemplary embodiments, the center of rotation is defined as the center of the multipoint region. In some exemplary embodiments, the center of rotation is defined as the location of the first interaction if such location is detected.

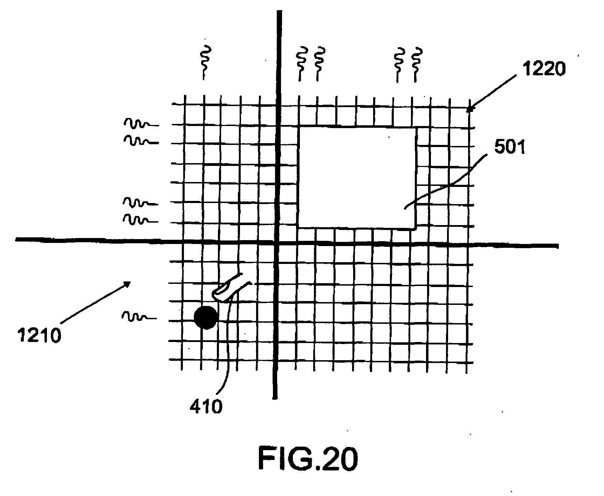

Reference is now made to Fig. 20, showing a digitizer sensor receiving general input from a user interaction over one portion of the digitizer sensor and receiving a multi-point gesture input over another non-interfering portion of the digitizer sensor in accordance with some embodiments of the present invention. According to some embodiments of the present invention, multi-point gestures as well as general input to the digitizer can be simultaneously detected on a single-point detection digitizer sensor by dividing the sensor to pre-defined portions. For example, the bottom left area 1210 of digitizer sensor 12 may be reserved for general input for a single user interaction, e.g. finger 410, while the top right area 1220 of digitizer sensor 12 may be reserved for multi-point gesture interaction with the digitizer, e.g. multi-point region 501. Other non-intervening areas may be defined to allow both regular input to the digitizer and gesture input.

According to some embodiment of the present invention, multi-point gestures together with an additional input to the digitizer are used to modify a gesture command. According to an exemplary embodiment, the gesture changes its functionality, i.e. associated command, upon detection of an additional finger touch which is not part of the gesture event. According to some embodiment of the present invention, the additional finger input to the digitizer is a selection of a virtual button that changes the gesture functionality. For example, the additional finger touch may indicate the re-scaling desired in a 'zoom in' and 'zoom out' gesture.

According to some embodiment of the present invention, a modifier command is defined to distinguish between two gestures. According to an exemplary embodiment, the gesture changes its functionality, i.e. associated command, upon detection of an additional finger touch 410 which is not part of the gesture event. For example, a 'zoom in' and/or 'zoom out' gestures performed in multi-point region 510, may be modified to a 're-scale' command upon the detection of a finger touch 410.

According to some embodiment of the present invention, a modifier command is defined to modify the functionality of a single finger touch upon the detection of a second finger touch on the screen. A multi-point region of the two finger touches is calculated and tracked. According to an exemplary embodiment, the second finger touch position is unchanged, e.g. stationary, which result in a multi-point region with a substantially unchanged position of one of its corners, e.g. one corner remains in the same position. According to an exemplary embodiment, upon the detection of a multipoint region with an unchanged position of only one of its corners, a modifier command is executed. According to some embodiments of the present invention, the pre-knowledge of the stationary finger touch position, resolves the ambiguity in two fingers position and the un-stationary finger can be tracked. An example of a modifier command is a 'Caps Lock' command. When a virtual keyboard is presented on the screen, and a modifier command, e.g. Caps Lock, is executed, the letters selected by the first finger touch are presented in capital letters.

According to some embodiments of the present invention, in specific software applications, it is known that one of the inputs from the two point user interactions is a position on a virtual button or keypad. In such a case, ambiguity due to multi-point interaction may be resolved by first locating a position on the virtual button or keypads and then identifying a second interaction location that can be tracked.

According to some embodiments of the present invention, in response to recognizing a gesture, but prior to executing command associated with gesture, a confirmation is requested. In some exemplary embodiments, the confirmation is provided by performing a gesture. According to some embodiments, selected gestures are recognized during the course of a gesture event and is executed directly upon recognition while the gesture is being performed, e.g. a scroll gesture. According to some embodiments of the present invention, some gestures having similar patterns in the initial stages of the gesture event require a delay before recognition is performed. For example, a gesture may be defined where two fingers move together to trace a 'V' shape. Such a gesture may be initially confused with a 'scroll down' gesture. Therefore, a delay is required before similar gestures can be recognized. Typically, gesture features are compared to stored gesture features and are only positively identified when the features match a single stored gesture.

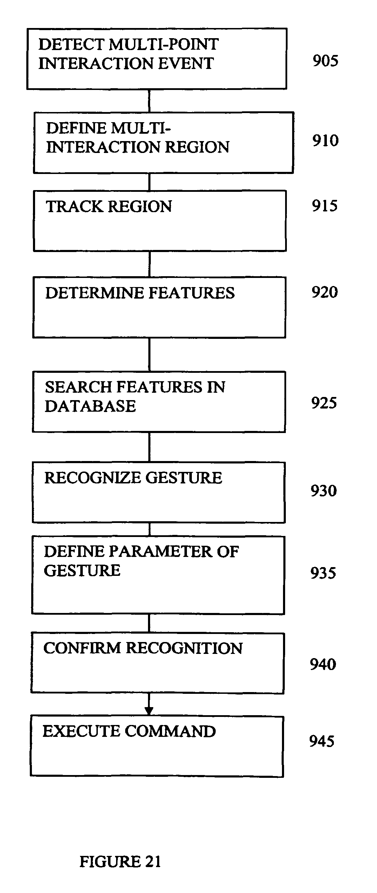

Reference is now made to Fig. 21 showing a simplified flow chart of an exemplary method for detecting a multi-point gesture on a single a single-point detection digitizer sensor. According to some embodiments of the present invention, a multi-point interaction event is detected when more than one multi-point region is determined along at least one axis (block 905). According to some embodiments of the present invention, in response to detecting a multi-point interaction event, a multipoint region is defined to include all possible locations of interaction (block 910). According to some embodiments of the present invention, over the course of the multipoint interaction event, changes in the multi-point region are tracked (block 915) and pre-defined features of the multi-point region over the course of the event are determined (block 920). According to some embodiments of the present invention, the determined features are searched in the database of pre-defined features belonging to pre-defined gestures (block 925). Based on matches of detected features with the pre-defined features belonging to pre-defined gestures a gesture may be recognized (block 930). According to some embodiments of the present invention, a parameter of a gesture is defined based on one or more features. For example, the speed of performing a scroll gesture may be used to define the scrolling speed for executing the scroll command. According to some embodiments of the present invention, the parameter of the gestures is defined (block 935). According to some embodiments of the present invention, some gestures require confirmation for correct recognition and for those gestures confirmation is requested (block 940). In response to confirmation when required and/or recognition, the command associated with the gesture is sent to host 22 and/or executed (block 945).

According to some embodiments of the present invention, multi-point gestures are mapped to more than one command. For example, a gesture may be defined for 'zoom in' and rotation. Such a gesture may include performing a rotation gesture while moving the two user interactions apart. In some exemplary embodiments, changes in an angle 702 and length of diagonal 704 is determined and used to identify the gesture.

Although the present invention has been mostly described in reference to multi-point interaction detection performed with fingertip interaction, the present invention is not limited to the type of user interaction. In some exemplary embodiments, multi-point interaction with styluses or tokens can be detected. Although the present invention has been mostly shown in reference to multi-point interaction detection performed with fingertip interaction with two different hands, gestures can be performed with two or more fingers from a single hand.

Although the present invention has been mostly described in reference to multi-point interaction detection performed with a single-point detection digitizer sensor, the present invention is not limited to such a digitizer and similar methods can be applied to a multi-point detection digitizer.

The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

## Claims

1. A method for recognizing functionality of multi-point interaction with a digitizer, the method comprising:
detecting output (420,425,430,435) from a digitizer system (100) corresponding to a multi-point interaction, the digitizer system (100) including a digitizer sensor (12),
determining a region (501) on the digitizer incorporating all possible locations (401) of interactions derivable from the outputs detected, wherein said all possible locations (401) derivable from the outputs detected are greater in number than the number of interactions included in the multi-point interaction;
tracking the region (501) determined from said all possible locations of the interactions as is derivable from the outputs detected over a time period of the multi-point interaction;
determining a change in at least one spatial feature of the region (501) during the multi-point interaction; and
recognizing functionality of multi-point interaction in response to the recognized change in the at least one spatial feature of the region (501).

2. The method according to claim 1, wherein the digitizer system (100) is a single point detection digitizer system.

3. The method according to claim 1 or claim 2, wherein the at least one spatial feature is selected from a group including: shape of the region, aspect ratio of the region, size of the region, location of the region, and orientation of the region.

4. The method according to any of claims 1-3, wherein the region (501) is a rectangular region with dimensions defined by the extent of the possible interaction locations (401), and wherein the at least one spatial feature is selected from a group including a length of a diagonal of the rectangle and an angle of the diagonal.

5. The method according to any of claims 1-4, wherein recognizing functionality of multi-point interaction includes recognizing a multi-point gesture.

6. The method according to any of claims 1-5, wherein recognizing functionality of multi-point interaction includes recognizing a modifier command performed with one interaction, wherein the modifier command is configured for modifying a functionality of at least one other interaction of the multi-point interaction.

7. The method according to claim 6, wherein the modifier command includes selection of a virtual button displayed on a display associated with the digitizer system, wherein the virtual button is configured for modifying a functionality of at least one other interaction of the multi-point interaction, wherein the at least one other interaction is a gesture, and wherein the one interaction and the at least one other interaction are performed over non-interfering portions of the digitizer sensor.

8. The method according to any of claims 1-7, wherein the multi-point interaction is performed with at least two like user interactions selected from a group including: at least two fingertips, at least two like styluses and at least two like tokens, wherein the at least two like user interactions interact with the digitizer sensor by touch, hovering, or both touch and hovering, and wherein the outputs detected in response to the multi-point interaction are ambiguous with respect to the location of at least one of the at least two user interactions.

9. The method according to claim 8 comprising:
determining that one of two user interactions interacting with the digitizer is stationary during the multi-point interaction;
identifying the location of the stationary user interaction; and
tracking the location of the other user interaction based on knowledge of the location of the stationary user interaction.

10. The method according to claim 8, comprising:
detecting a location of one user interaction of two user interactions interacting with the digitizer in response to the one user interaction appearing before the other user interaction; and
tracking locations of each of the two user interactions based on the detected location of the one user interaction.

11. The method according to claim 9 or claim 10, wherein interaction performed by the one user interaction changes a functionality of interaction performed by the other user interaction.

12. The method according to any of claims 1-11, wherein the digitizer sensor (12) is formed by a plurality of conductive lines arranged in a grid.

13. The method according to claim 12, wherein the detected outputs (420,425,430,435) are a single array of outputs for each axis of the grid.

14. The method according to claim 12 or claim 13, wherein a possible location of an interaction is derivable from outputs sampled from a plurality of the conductive lines.

15. The method according to any of claims 1-14, wherein the outputs are detected by a capacitive detection.

## Patentansprüche

1. Verfahren zum Erkennen einer Funktionalität einer Mehrpunkte-Interaktion mit einem Digitalisierer, wobei das Verfahren umfasst:
Detektieren von Ausgaben (420, 425, 430, 435) eines Digitalisierersystems (100), die einer Melupunkte-Interaktion entsprechen, wobei das Digitalisierersystem (100) einen Digitalisierersensor (12) enthält;
Bestimmen einer Region (501) am Digitalisierer, die alle möglichen Positionen (401) von Interaktionen enthält, die von den detektierten Ausgaben ableitbar sind, wobei die allen möglichen Positionen (401), die von den delektierten Ausgaben ableitbar sind, zahlenmäßig größer als die Anzahl der in der Mehrpunkte-Interaktion enthaltenen Interaktionen ist;
Verfolgen der Region (501), die anhand der allen möglichen Positionen der Interaktionen, wie von den detektierten Ausgaben ableitbar, bestimmt wurde, über einen Zeitraum der Mehl-punkte-Interaktion;
Bestimmen einer Änderung zumindest eines Raummerkmals der Region (501) während der Melnpunkte-Interaktion; und
Erkennen einer Funktionalität der Mehrpunkte-Interaktion in Reaktion auf die erkannte Änderung des zumindest einen Raummerkmals der Region (501)

2. Verfahren nach Anspruch 1, wobei das Digitalisierersystem (100) ein Einpunkt-Detektion-Digitalisierersystem ist,

3. Verfahren nach Anspruch 1 oder 2, wobei das zumindest eine Raummerkmal aus einer Gruppe, enthaltend Form der Region, Aspektverhältnis der Region, Größe der Region, Position der Region und Ausrichtung der Region, ausgewählt wird.

4. Verfahren nach einem der Ansprüche 1 bis 3, wobei die Region (501) eine rechteckige Region ist, deren Dimensionen durch das Ausmaß der möglichen Interaktionspositionen (401) definiert werden, wobei das zumindest eine Raummerkmal aus einer Gruppe, enthaltend eine Länge einer Diagonale des Rechtecks und einen Winkel der Diagonale, ausgewählt wird.

5. Verfahren nach einem der Ansprüche 1 bis 4, wobei das Erkennen der Funktionalität einer Mehrpunkte-Interaktion das Erkennen einer Mehrpunkte-Geste umfasst.

6. Verfahren nach einem der Ansprüche 1 bis 5, wobei das Erkennen der Funktionalität einer Mehrpunkte-Interaktion das Erkennen eines Modifikatorbefehls umfasst, der bei einer Interaktion ausgeführt wird, wobei der Modifikatorbefehl konfiguriert ist, um eine Funktionalität zumindest einer anderen Interaktion der Mehrpunkte-Interaktion zu modifizieren.

7. Verfahren nach Anspruch 6, wobei der Modifikatorbefehl das Auswählen einer virtuellen Schaltfläche umfasst, die auf einer mit dem Digitalisierersystem assoziierten Anzeige angezeigt wird, wobei die virtuelle Schaltfläche konfiguriert ist, um eine Funktionalität zumindest einer anderen Interaktion der Mehrpunkte-Interaktion zu modifizieren, wobei die zumindest eine andere Interaktion eine Geste ist, und wobei die eine Interaktion und die zumindest eine andere Interaktion über nicht-stüronde Abschnitte des Digitalisierersensors durchgeführt werden.

8. Verfahren nach einem der Ansprüche 1 bis 7, wobei die Mehrpunkte-Interaktion mit zumindest zwei ähnlichen Benutzerinteraktionen ausgefülut wird, die aus einer Gruppe, enthaltend zumindest zwei Fingerspitzen, zumindest zwei ähnliche Stifte und zumindest zwei ähnliche Tokens, ausgewählt sind, wobei die zumindest zwei ähnlichen Benutzerinteraktionen über Berührung, Hovern oder sowohl Berührung als auch Hovern mit dem Digitalisierersensor interagieren, und wobei die in Reaktion auf die Mehrpunkte-Interaktion detektierten Ausgaben in Bezug auf die Position zumindest einer der beiden Benutzerinteraktionen mehrdeutig sind.

9. Verfahren nach Anspruch 8, umfassend:
Bestimmen, dass eine der beiden Benutzerinteraktionen, die mit dem Digitalisierer interagieren, während der Mehrpunkte-Interaktionen ortsfest ist;
Identifizieren der Position der ortsfesten Benutzerinteraktion; und
Verfolgen der Position der anderen Benutzerinteraktion auf Basis der Kenntnis der Position der ousfesten Benutzerinteraktion,

10. Verfahren nach Anspruch 8, umfassend:
Detektieren einer Position einer Benutzerinteraktion von zwei Benutzerinteraktionen, die mit dem Digitalisierer interagieren, in Reaktion auf die eine Benutzerinteraktion, die vor der anderen Benutzerinteraktion erscheint; und
Verfolgen von Positionen jeder der beiden Benutzerintel-aktionen auf Basis der detektierten Position der einen Benutzerinteraktion.

11. Verfahren nach Anspruch 9 oder 10, wobei die von der einen Benutzerinteraktion durchgeführte Interaktion eine Funktionalität der Interaktion ändert, die von der anderen Benutzerinteraktion durchgeführt wird.

12. Verfahren nach einem der Ansprüche 1 bis 11, wobei der Digitalisierersensor (12) durch eine Mehrzahl von in einem Muster angeordneten leitfähigen Leitungen gebildet ist.

13. Verfahren nach Anspruch 12, wobei die detektierten Ausgaben (420, 425, 430, 435) eine einzelne Ausgabenanordnung für jede Achse des Musters sind.

14. Verfahren nach Anspruch 12 oder 13, wobei ein möglicher Standort einer Interaktion von Ausgaben ableitbar ist, die aus einer Mehrzahl von leitflähigen Leitungen erhalten werden.

15. Verfahren nach einem der Ansprüche 1 bis 14, wobei die Ausgaben durch eine kapazitive Detektion detektiert werden.

## Revendications

1. Procédé de reconnaissance de fonctionnalité d'interaction multipoint avec un numériseur, le procédé consistant à :
détecter les sorties (420, 425, 430, 435) d'un système de numérisation (100) correspondant à une interaction multipoint, le système de numérisation (100) comprenant un capteur de numérisation (12),
déterminer une région (501) sur le numériseur incorporant tous les emplacements possibles (401) d'interactions pouvant dériver des sorties détectées, le nombre desdits emplacements possibles (401) pouvant dériver des sorties détectées étant supérieur au nombre d'interactions incluses dans l'interaction multipoint ;
rechercher la région (501) déterminée à partir de l'ensemble desdits emplacements possibles des interactions tels que pouvant dériver des sorties détectées sur une période de temps de l'interaction multi-point ;
déterminer un changement dans au moins une caractéristique spatiale de la région (501) au cours de l'interaction multipoint ; et
reconnaître la fonctionnalité de l'interaction multipoint en réponse au changement reconnu dans l'au moins une caractéristique spatiale de la région (501).

2. Procédé selon la revendication 1, dans lequel le système de numérisation (100) est un système de numérisation à détection de point unique.

3. Procédé selon la revendication 1 ou la revendication 2, dans lequel l'au moins une caractéristique spatiale est choisie dans un groupe comprenant : la forme de la région, le rapport d'aspect de la région, la taille de la région, l'emplacement de la région et l'orientation de la région.

4. Procédé selon l'une quelconque des revendications 1 à 3, dans lequel la région (501) est une région rectangulaire dont les dimensions sont définies par l'étendue des emplacements d'interaction possibles (401) et dans lequel l'au moins une caractéristique spatiale est choisie dans un groupe comprenant une longueur d'une diagonale du rectangle et un angle de la diagonale.

5. Procédé selon l'une quelconque des revendications 1 à 4, dans lequel la reconnaissance de fonctionnalité d'interaction multipoint consiste à reconnaître un geste multipoint.

6. Procédé selon l'une quelconque des revendications 1 à 5, dans lequel la reconnaissance de fonctionnalité d'interaction multipoint consiste à reconnaître une commande modificatrice réalisée avec une interaction, dans lequel la commande modificatrice est configurée pour modifier une fonctionnalité d'au moins une autre interaction de l'interaction multipoint.

7. Procédé selon la revendication 6, dans lequel la commande modificatrice comprend la sélection d'un bouton virtuel affiché sur un affichage associé au système de numérisation, dans lequel le bouton virtuel est configuré pour modifier une fonctionnalité d'au moins une autre interaction de l'interaction multipoint, dans lequel l'au moins une autre interaction est un geste, et dans lequel l'une interaction et l'au moins une autre interaction sont réalisées sur des parties non interférantes du capteur de numériseur.

8. Procédé selon l'une quelconque des revendications 1 à 7, dans lequel l'interaction multipoint est réalisée avec aux moins deux interactions d'utilisateur similaires choisies dans un groupe comprenant : au moins deux bouts de doigt, au moins deux stylets similaires et au moins deux jetons similaires, dans lequel les au moins deux interactions d'utilisateur similaires interagissent avec le capteur de numérisation par contact, passage du pointeur, ou à la fois contact et passage du pointeur, et dans lequel les sorties détectées en réponse à l'interaction multipoint sont ambiguës par rapport à l'emplacement d'au moins une des au moins deux interactions d'utilisateur.

9. Procédé selon la revendication 8, consistant à :
déterminer que l'une de deux interactions d'utilisateur interagissant avec le numériseur est fixe lors de l'interaction multipoint ;
identifier l'emplacement de l'interaction d'utilisateur fixe ; et
rechercher l'emplacement de l'autre interaction d'utilisateur sur la base de la connaissance de l'emplacement de l'interaction d'utilisateur fixe.

10. Procédé selon la revendication 8, consistant à :
détecter un emplacement d'une interaction d'utilisateur parmi deux interactions d'utilisateur interagissant avec le numériseur en réponse à l'une interaction d'utilisateur survenant avant l'autre interaction d'utilisateur ; et
rechercher des emplacements de chacune des deux interactions d'utilisateur sur la base de l'emplacement détecté de l'interaction d'utilisateur.

11. Procédé selon la revendication 9 ou la revendication 10, dans lequel l'interaction réalisée par l'une interaction d'utilisateur modifie une fonctionnalité d'interaction réalisée par l'autre interaction d'utilisateur.

12. Procédé selon l'une quelconque des revendications 1 à 11, dans lequel le capteur de numérisation (12) est formé par une pluralité de lignes conductrices disposées dans une grille.

13. Procédé selon la revendication 12, dans lequel les sorties détectées (420, 425, 430, 435) sont un réseau simple de sorties pour chaque axe de la grille.

14. Procédé selon la revendication 12 ou la revendication 13, dans lequel un emplacement possible d'une interaction peut être dérivé des sorties échantillonnées à partir d'une pluralité de lignes conductrices.

15. Procédé selon l'une quelconque des revendications 1 à 14, dans lequel les sorties sont détectées grâce à une détection capacitive.
